# EUROPEAN PATENT SPECIFICATION

(11) **EP 3 794 293 B1**
(45) Date of publication and mention of the grant of the patent: **05.07.2023**
(21) Application number: 19802914.2
(22) Date of filing: 10.05.2019
(51) Int. Cl.: F25D 21/06, F24F 1/02, F24F 3/06, F25B 47/02, F25D 21/02

(54) **METHOD FOR CONTROL OF A VENTILATION HEAT PUMP**
VERFAHREN ZUR STEUERUNG EINER LÜFTUNGSWÄRMEPUMPE
PROCÉDÉ DE COMMANDE D'UNE POMPE À CHALEUR DE VENTILATION

(30) Priority: 15.05.2018 NO 20180682
(43) Date of publication of application: 24.03.2021
(73) Proprietor: Romy Clima AS, 7514 Stjørdal (NO)
(72) Inventor: MYHRE, Roar, 7517 Hell (NO)
(74) Representative: Acapo AS
(86) International application number: PCT/NO2019/050104
(87) International publication number: WO 2019/221606

(56) References cited:
- EP-A1- 2 757 327
- EP-A1- 3 086 060
- CN-U- 206 739 692
- JP-A- S5 575 151
- NO-A1- 20 130 573
- SE-A1- 1 651 009
- US-A- 4 007 603
- US-A1- 2005 262 853
- US-A1- 2018 119 981

## Description

### Field of the invention

The present invention relates to a method for control of a ventilation heat pump, said ventilation heat pump comprises several dampers, fans, an evaporator/condenser, air mass regulators, temperature sensors, air filters, pressure transmitters and also at least one compressor, cooling tubes, a branch valve and a choke valve associated with the compressor.

### Background of the invention

In connection with defrosting, traditional ventilation heat pumps, in the main, have two alternatives, namely to either turn the cooling circuit by stopping the fan from working and taking the energy out of the exhaust air (recirculated air) in the condenser. But then the temperature in the supplied air will fall many degrees or stop the compressor and the fans/air stream and use the electrical heating element that is fitted in the evaporator and defrost by increasing the temperature in the evaporator.

### Description of prior art

WO2014002357 A1 describes a defrosting function comprised of stopping the compressor and closing the damper.

US 2018/119981 A1 relates to an integrated ventilation unit configured to provide ventilation and conditioned air to an indoor space.

EP2757327 A1 describes a defrosting function where the compressor is stopped, and a ventilation channel is closed with the help of a damper.

WO2017203680 A1 describes an air conditioning system where a damper for outlet air is closed in connection with defrosting.

US2014260368 A1 relates to a heat pump system where parts of the system are closed with the help of a damper for defrosting.

JP2009250464 A describes defrosting of a ventilation installation by closing a damper.

EP3086060 A1 shows use of a pressure sensor for measuring of the differential pressure over an evaporator.

US2005262853 A1 describes detection of ice formation in an evaporator by measuring of the pressure drop in the airstream.

US2007006600 A1 relates to estimation of the flow velocity from pressure measurements and the use of this to start the defrosting.

US2975611 A shows the use of a pressure sensitive switch for control of defrosting.

Reference is also given to US 2016252290 A1 and NO 20130573 A1 as examples of prior art.

### Objects of the present invention

The invention relates to a method and function for defrosting a ventilation heat pump. In the defrosting the heat pump compressor is stopped, exhaust fan and supply air fan are reduced by for example, 50%, and also that the damper for external air to the evaporator and fresh air to the condenser, respectively, are closed. The need for defrosting is detected by the help of one or more pressure sensors that measure the drop in pressure over the heat pump evaporator.

Damper control is used to control/move/close the air in the aggregate, this because one uses the temperature of for example, 50%, airmass of heated room air as a fan (at for example 50% power) pulls from a heated room to defrost the evaporator with the energy from the exhaust air back to the room and in addition the supplied air will (at example 50% power) pull about 50% of the exhaust air up to the room. This is to prevent stopping of the air stream from the installation and to reduce the experience of defrosting and air stream (recirculated air) to the room is reduced by about 50%, but does not stop. Other %-age advantages can also be used.

It is also possible to insert an electric battery that is controlled by the supply air temperature in the automatics after the condenser to maintain the supply air temperature during the defrosting.

With the invention a ventilation heat pump is provided which uses the energy from the exhaust air instead of turning the cooling circle during the defrosting and which maintains a "fixed" volume of air during the defrosting.

### Summary of the invention

The above mentioned objects are achieved with a method for control of a ventilation heat pump, said ventilation heat pump comprises several dampers, a supply air fan, an exhaust fan, a condenser, an evaporator, air volume regulators, temperature sensors, air filters, pressure transmitters, and also at least one compressor, cooling tubes, a branch valve and a choke valve connected with the compressor, where the method comprises the steps:
measure the pressure drop over the evaporator by the use of a pressure transmitter during the operation of the ventilation heat pump to determine the need for defrosting,
with the registration of an increased pressure drop by the pressure transmitter over a predetermined threshold value, the defrosting sequence is starting comprising the steps:
   the ventilation heat pump compressor is stopped,
   the power level for exhaust air fan and supplied air fan is reduced to a level lower than for normal operation,
   the damper for external air to the evaporator is closed,
   the damper for fresh air to the condenser is closed, and
   the damper for return air to the evaporator is set to lead return air to the evaporator,
   in which energy from the return air, during the defrosting sequence, is used for the defrosting of the evaporator, and also the circulation of a given volume of recirculated air is maintained.

The defrosting sequence can be driven until it is registered that the pressure drop is less than the predetermined threshold value. Alternatively, the defrosting sequence can be driven independently by a time switch.

The power level to the exhaust fan and the supply air fan can, during the defrosting sequence, be reduced to a set point for the volume of recirculated air of 50% of normal operation. The exhaust fan and supply air fan can, during the defrosting sequence, also reduce the volume of recirculated air to about 50% of normal operation.

The supply air fan can function as a recirculation fan during the defrosting sequence.

After the defrosting sequence has been completed, the ventilation heat pump can be started for normal operation in that the damper for external air to the evaporator is opened, the compressor is started, the damper for fresh air to the condenser is opened, the damper for return air to the evaporator is set to lead return air to the evaporator, the power level to the exhaust fan is increased to the set point for the volume of air used normally, and the power level to the air supply fan is increased to the set point for the volume of air for normal operation.

The pressure transmitter can be fitted to the inlet side and outlet side of the evaporator to measure the pressure drop over the evaporator.

To prevent a stoppage of the airstream from the ventilation heat pump during the defrosting, the air circulation can be reduced by 50% in that the damper control is used to control air in the ventilation heat pump, where energy in 50% volume of air of heated room air is used to fan at 50% power level which pulls from the heated room to defrost the evaporator.

The supply air fan can be driven at 50% power and pull 50% of the return air back to the room that shall be heated up.

Furthermore, an electric battery which is controlled by the supply air temperature in the automatics after the condenser can be used to maintain the supply air temperature during the defrosting.

About 50% of the heated room air can be sent back to the room as recirculated air through the condenser, the electric battery and the supply air fan.

In connection with the defrosting sequence, the draining can be carried out by a drain of moisture from the air in the condenser in heating mode and from the evaporator in cooling mode, where the draining from the condenser and evaporator are coupled together to a common water lock with outlets out to the waste side/air inlet side.

### Description of the figures

Preferred embodiments of the invention shall be described in more detail in the following with reference to the enclosed figure, in which:

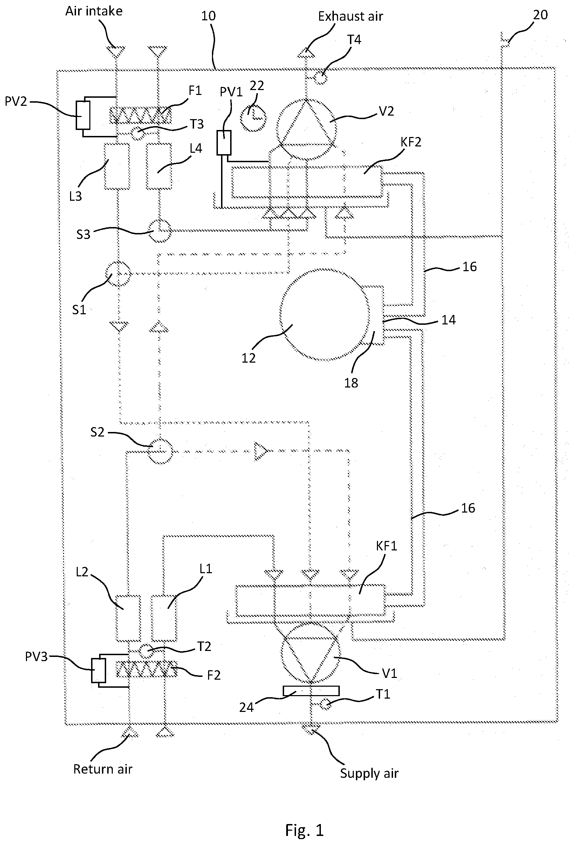

Figure 1 shows a principle diagram of a ventilation heat pump for use in the invention.

### Description of preferred embodiments of the invention

The ventilation heat pump 10, which is used in the invention, is a ventilation heat pump that can ventilate and give a balanced ventilation or air recirculation with heating and cooling of the rooms it is connected to by ventilation channels.

The rooms and ventilation channels are not shown as these are not essential for the invention and furthermore, it is known to a person skilled in the art that the design can vary from building to building.

### Main components in the ventilation heat pump 10:

12 - compressor
14 - choke valve
16 - cooling pipe
18 - branch valve, for example a four-way valve
20 - drainage
22 - time switch
24 - battery
F1-F2 - air filters
T1-T4 - thermistors, temperature sensors
L1-L4 - air volume regulators (CAV)
S1-S3 - damper with motors
V1-V2 - fan with motors
KF1-KF2 - condenser/evaporator
PV1-PV3 - pressure transmitters

The ventilation heat pump 10 comprises several dampers

S1-S3, fans V1-V2, condenser/evaporator KF1-KF2, air volume regulators L1-L4, temperature sensors T1-T4, air filters F1-F2, pressure transmitters PV1-PV3 and also at least one compressor 12, several cooling tubes 16, a branch valve 18 and a choke valve 14 connected with the compressor 12.

The pressure transmitters PV2-PV3 are, in the main, used as filter guards for the air filters F1-F2 for air supply and return air, respectively, and which give a signal when the pressure drop over the filters is too high (dirty) and must be changed.

The invention relates, in the main, to the function for defrosting of the ventilation heat pump 10. In the defrosting, the heat pump compressor 12 is stopped, the exhaust fan and supply air fans V1,V2 are reduced to about 50% power, and also that at least the dampers S3,S1 for external air to the evaporator KF2 and fresh air to the condenser KF1, respectively, are shut. The need for defrosting is detected with the help of a pressure sensor PV1 that measures the pressure drop over the evaporator KF2.

The ventilation heat pump 10 can be operated with a start/stop function and/or with time control in the form of a timer or time switch 22. With a damper function, the ventilation heat pump 10 is operated as a ventilation heat pump with air exchanging in the rooms it is connected to, and/or is operated as a pure heat pump without exchanging of the air (recirculated air). The operating mode can be chosen and controlled with a timer control, a movement sensor or a CO₂ measuring unit.

Such a solution leads to optimal operation and energy saving, as the rooms can be controlled according to need with air exchange when the load from the rooms materialises.

Operation of the ventilation heat pump and the defrosting sequence comprises in the main three steps.

In a first step the pressure transmitter PV1 will warn when the pressure drop over the evaporator is too large, i.e. at the registering of an increased pressure drop by the pressure transmitter PV 1 over a predetermined threshold value, the defrosting sequence is started. The defrosting sequence can be operated until it is registered that the pressure drop has fallen below the predetermined threshold value, or the defrosting sequence can be operated dependent on a time switch 22, where the time switch 22 can be integrated in the automatics in or to the evaporator KF2.

In a second step, the volume of air and revolutions of the exhaust fan V2 and air supply fan V1 are reduced. The power level to the exhaust fan V2 and the supply air fan V1 can, during the defrosting sequence, be reduced to about half the normal operation, i.e. for example to a set point for the volume of air of 50% of normal operation. The air supply fan V1 can then function as a recirculating air fan.

Furthermore, the ventilation heat pump compressor 12 is stopped. The damper S3 for external air to the evaporator KF2 is closed, the damper S1 for fresh air to the condenser KF1 is closed and the damper S2 for return air to the evaporator KF2 is set to lead the return air to the evaporator KF2.

Drainage from the evaporator KF2 and the condenser KF1 can be achieved with drainage of moisture from the air in the condenser KF1 in heating mode and from the evaporator KF2 in cooling mode, where the drainage from the condenser KF1 and the evaporator KF2 is coupled together to a common water lock and with an outlet 20 out to the exhaust side/air intake side.

During the defrosting sequence energy from the return air is preferably used for the defrosting of the evaporator KF2, and also that the circulation of a given volume of recirculated air is maintained.

An electric battery 24 which is controlled by the supply air temperature in the automatics after the condenser KF1 can be used to maintain the supply air temperature during the defrosting, where about 50% of the heated room air can be sent back to the room as recirculated air through the condenser KF1, the electric battery 24 and the supply air fan V1.

In a third step the defrosting sequence is terminated. This is activated when the time switch 22 has run out of time or a lower pressure drop is registered and the evaporator KF2 is defrosted and the drained water has been disposed of.

The ventilation heat pump 10 is then started for normal operation in that the damper S3 for external air to the evaporator KF2 is opened, the damper S1 for fresh air to the condenser KF1 is opened and the compressor 12 is started. Furthermore, the damper S2 is set for return air to the evaporator KF2 to lead return air to the evaporator KF2 such that the installation is placed in ventilation mode. The fans V2 and V1 are adjusted to normal operation and revolutions in that the power level to the exhaust valve V2 is increased to the set point for the volume of air for normal operation and the power level to the air supply fan V1 is increased to the set point for the volume of air for normal operation.

The ventilation heat pump 10 can be operated with air exchanging, where the damper S1 is open, the damper S2 is open with the air direction towards the evaporator KF2 and the damper S3 is open. The fans V1 and V2 are in normal operation.

## Claims

1. Method for control of a ventilation heat pump (10), said ventilation heat pump (10) comprises several dampers (S1-S3), a supply air fan (V1), an exhaust fan (V2), a condenser (KF1), an evaporator (KF2), air volume regulators (L1-L4), temperature sensors (T1-T4), air filters (F1-F2), pressure transmitters (PV1-PV3) and also at least one compressor (12), cooling tubes (16), a branch valve (18) and a choke valve (14) connected with the compressor (12), as the method comprises the following steps:
- measure pressure drop over the evaporator (KF2) by the use of a pressure transmitter (PV1) during operation of the ventilation heat pump (10) to determine the need for defrosting,
- by registration of an increased pressure drop by the pressure transmitter (PV1) over a predetermined threshold value, a defrosting sequence is started comprising the steps:
- stop the compressor (12),
- reduce power level to the exhaust fan (V2) and supply air fan (V1) to a level which is lower than for normal operation,
- shut the damper (S3) for external air to the evaporator (KF2),
- shut the damper (S1) for fresh air to the condenser (KF1), and
- set the damper (S2) for the return air to the evaporator (KF2) to lead return air to the evaporator (KF2), in which
- during the defrosting sequence, energy from the return air is used for defrosting of the evaporator (KF2), and circulation of a given volume of recirculated air is maintained.

2. Method according to claim 1, in which the defrosting sequence is run until it is registered that the pressure drop has fallen below the predetermined threshold level.

3. Method according to claim 1, in which the defrosting sequence is run dependent on a time switch (22).

4. Method according to claim 1, in which the power level to the exhaust fan (V2) and air supply fan (V1) is reduced during the defrosting sequence to set point for air volume of recirculated air to about 50% of normal operation.

5. Method according to claim 1, in which the power level to the exhaust fan (V2) and the air supply fan (V1) during the defrosting sequence reduces the volume of recirculated air to about half the volume during normal operation.

6. Method according to claim 1, in which the supply air fan (V1) functions during the defrosting sequence as a recirculating air fan.

7. Method according to claim 1, in which the ventilation heat pump (10) starts for normal operation after the defrosting sequence is completed by:
- opening the damper (S3) for external air to the evaporator (KF2),
- starting the compressor (12),
- opening the damper (S1) for fresh air to the condenser (KF1),
- setting the damper (S2) for return air to the evaporator (KF2) to lead return air to the evaporator (KF2),
- increasing the power level to the exhaust fan (V2) to the set point for the volume of air during normal operation, and
- increasing the power level to the supply air fan (V1) to the set point for the volume of air at normal operation.

8. Method according to claim 1, in which the pressure transmitter (PV1) is fitted to the inlet side and the outlet side of the evaporator (KF2) to measure the pressure drop over the evaporator (KF2).

9. Method according to claim 1, in which to prevent stopping of the air stream from the ventilation heat pump (10) during the defrosting, the air circulation is reduced to 50% in that damper control is used to lead air in the ventilation heat pump where energy in 50% of the volume of heated room air is used to fan (V2) at 50% power that pulls from the heated room to defrost the evaporator (KF2).

10. Method according to claim 9, in which the supply air fan (V1) is run on 50% power and pulls 50% of the return air back to the room that shall be heated.

11. Method according to claim 1, in which an electric battery (24) which is controlled by the air supply temperature in the automatics after the condenser (KF1) is used to maintain the air supply temperature during the defrosting.

12. Method according to claims 10 and 11, in which 50% of the heated room air is sent back to the room as recirculated air through the condenser (KF1), the electric battery (24) and the supply air fan (V1).

13. Method according to claim 1, in which drainage is carried out by run off of moisture from air in the condenser (KF1) in heating mode and from the evaporator (KF2) in cooling mode, where drainage from the condenser (KF1) and evaporator (KF2) is coupled together to a common water lock and with outlets (20) to the exhaust side/air inlet side.

## Patentansprüche

1. Verfahren zur Steuerung einer Lüftungswärmepumpe (10), wobei die Lüftungswärmepumpe (10) mehrere Klappen (S1-S3), einen Zuluftventilator (V1), einen Abluftventilator (V2), einen Kondensator (KF1), einen Verdampfer (KF2), Luftmengenregler (L1-L4), Temperatursensoren (T1-T4), Luftfilter (F1-F2), Druckgeber (PV1-PV3) sowie mindestens einen Kompressor (12), Kühlrohre (16), ein Abzweigventil (18) und ein Drosselventil (14) umfasst, das mit dem Kompressor (12) verbunden ist, da das Verfahren folgende Schritte umfasst:
- Messen des Druckabfalls über dem Verdampfer (KF2) mit Hilfe eines Druckgebers (PV1) während des Betriebs der Lüftungswärmepumpe (10), um die Notwendigkeit eines Abtauens zu bestimmen,
- durch Erfassen eines erhöhten Druckabfalls über einen vorbestimmten Schwellenwert durch den Druckgeber (PV1), Starten einer Abtausequenz, welche folgende Schritte umfasst:
- Anhalten des Kompressors (12),
- Reduzieren der Leistung des Abluftventilators (V2) und des Zuluftventilators (V1) auf ein Niveau, das niedriger als im Normalbetrieb ist,
- Schließen der Klappe (S3) für Außenluft zu dem Verdampfer (KF2),
- Schließen der Klappe (S1) für Frischluft zu dem Kondensator (KF1), und
- Einstellen der Klappe (S2) für die Rückluft zu dem Verdampfer (KF2), um Rückluft zu dem Verdampfer (KF2) zu leiten, bei dem
- während der Abtausequenz Energie aus der Rückluft zum Abtauen des Verdampfers (KF2) verwendet und die Zirkulation eines gegebenen Volumens an Umluft aufrechterhalten wird.

2. Verfahren nach Anspruch 1, bei dem die Abtausequenz ausgeführt wird, bis erfasst wird, dass der Druckabfall unter den vorbestimmten Schwellenwert gefallen ist.

3. Verfahren nach Anspruch 1, bei dem die Abtausequenz abhängig von einem Zeitschalter (22) ausgeführt wird.

4. Verfahren nach Anspruch 1, bei dem das Leistungsniveau an den Abluftventilator (V2) und den Zuluftventilator (V1) während der Abtausequenz auf einen Sollwert für das Volumen an Umluft von etwa 50 % des Normalbetriebs reduziert wird.

5. Verfahren nach Anspruch 1, bei dem das Leistungsniveau an den Abluftventilator (V2) und den Zuluftventilator (V1) während der Abtausequenz das Volumen der Umluft auf etwa die Hälfte des Volumens im Normalbetrieb reduziert.

6. Verfahren nach Anspruch 1, wobei der Zuluftventilator (V1) während der Abtausequenz als Umluftventilator arbeitet.

7. Verfahren nach Anspruch 1, bei dem die Lüftungswärmepumpe (10) nach Beendigung der Abtausequenz im Normalbetrieb startet, durch Folgendes:
- Öffnen der Klappe (S3) für Außenluft zu dem Verdampfer (KF2),
- Starten des Kompressors (12),
- Öffnen der Klappe (S1) für Frischluft zu dem Kondensator (KF1),
- Einstellen der Klappe (S2) für Rückluft zu dem Verdampfer (KF2), um Rückluft zu dem Verdampfer (KF2) zu leiten,
- Erhöhen des Leistungsniveaus an den Abluftventilator (V2) auf den Sollwert für das Luftvolumen im Normalbetrieb, und
- Erhöhen des Leistungsniveaus an den Zuluftventilator (V1) auf den Sollwert für das Luftvolumen im Normalbetrieb.

8. Verfahren nach Anspruch 1, bei dem der Druckgeber (PV1) an der Einlassseite und der Auslassseite des Verdampfers (KF2) installiert ist, um den Druckabfall über dem Verdampfer (KF2) zu messen.

9. Verfahren nach Anspruch 1, bei dem, um zu verhindern, dass der Luftstrom aus der Lüftungswärmepumpe (10) während des Abtauens gestoppt wird, die Luftzirkulation durch Verwendung der Klappensteuerung auf 50 % reduziert wird, um Luft in die Lüftungswärmepumpe zu leiten, worin Energie in 50 % des Volumens von beheizter Raumluft von dem Ventilator (V2) bei 50 % Leistung verwendet wird, die dieser aus dem beheizten Raum zieht, um den Verdampfer (KF2) abzutauen.

10. Verfahren nach Anspruch 9, bei dem der Zuluftventilator (V1) mit 50 % Leistung betrieben wird und 50 % der Rückluft zurück in den zu beheizenden Raum zieht.

11. Verfahren nach Anspruch 1, bei dem eine elektrische Batterie (24), die von der Zulufttemperatur in der Automatik nach dem Kondensator (KF 1) gesteuert wird, verwendet wird, um die Luftzufuhrtemperatur während des Abtauens aufrechtzuerhalten.

12. Verfahren nach Ansprüchen 10 und 11, bei dem 50 % der beheizten Raumluft als Umluft durch den Kondensator (KF1), die elektrische Batterie (24) und den Zuluftventilator (V1) in den Raum zurückgeführt wird.

13. Verfahren nach Anspruch 1, bei dem ein Wasserablauf durch Abtrennen von Feuchtigkeit aus der Luft im Kondensator (KF1) im Heizbetrieb und aus dem Verdampfer (KF2) im Kühlbetrieb erfolgt, worin ein Wasserablauf aus dem Kondensator (KF1) und aus dem Verdampfer (KF2) zu einer gemeinsamen Wasserschleuse und mit Auslässen (20) auf der Abluftseite/Lufteintrittsseite miteinander gekoppelt ist.

## Revendications

1. Procédé de commande d'une pompe à chaleur de ventilation (10), ladite pompe à chaleur de ventilation (10) comprenant plusieurs registres (S1-S3), un ventilateur d'alimentation en air (V1), un ventilateur d'échappement (V2), un condenseur (KF1), un évaporateur (KF2), des régulateurs de volume d'air (L1-L4), des capteurs de température (T1-T4), des filtres à air (F1-F2), des transmetteurs de pression (PV1-PV3) et en outre au moins un compresseur (12), des tubes de refroidissement (16), une soupape de dérivation (18) et une soupape d'étranglement (14) connectées au compresseur (12), le procédé comprenant les étapes suivantes :
- la mesure d'une chute de pression à travers l'évaporateur (KF2) au moyen d'un transmetteur de pression (PV1) pendant le fonctionnement de la pompe à chaleur de ventilation (10) pour déterminer le besoin de dégivrage,
- par l'enregistrement d'une chute de pression accrue par le transmetteur de pression (PV1) au-dessus d'une valeur seuil prédéterminée, démarrage d'une séquence de dégivrage comprenant les étapes suivantes :
- l'arrêt du compresseur (12),
- la réduction du niveau de puissance du ventilateur d'échappement (V2) et du ventilateur d'alimentation en air (V1) à un niveau qui est inférieur à un fonctionnement normal,
- la fermeture du registre (S3) d'air extérieur vers l'évaporateur (KF2),
- la fermeture du registre (S1) d'air frais vers le condenseur (KF1), et
- le réglage du registre (S2) d'air de retour vers l'évaporateur (KF2) pour conduire l'air de retour vers l'évaporateur (KF2), dans lequel
- pendant la séquence de dégivrage, l'énergie provenant de l'air de retour est utilisée pour le dégivrage de l'évaporateur (KF2), et la circulation d'un volume donné d'air de recirculation est maintenue.

2. Procédé selon la revendication 1, dans lequel la séquence de dégivrage est exécutée jusqu'à ce qu'il soit enregistré que la chute de pression a diminué pour passer en dessous de la valeur seuil prédéterminée.

3. Procédé selon la revendication 1, dans lequel la séquence de dégivrage est exécutée en fonction d'une minuterie (22).

4. Procédé selon la revendication 1, dans lequel le niveau de puissance du ventilateur d'échappement (V2) et du ventilateur d'alimentation en air (V1) est réduit pendant la séquence de dégivrage pour atteindre un point de consigne pour le volume d'air de recirculation à environ 50 % du fonctionnement normal.

5. Procédé selon la revendication 1, dans lequel le niveau de puissance du ventilateur d'échappement (V2) et du ventilateur d'alimentation en air (V1) pendant la séquence de dégivrage réduit le volume d'air de recirculation à environ la moitié du volume pendant le fonctionnement normal.

6. Procédé selon la revendication 1, dans lequel le ventilateur d'alimentation en air (V1) fonctionne pendant la séquence de dégivrage comme un ventilateur d'air de recirculation.

7. Procédé selon la revendication 1, dans lequel la pompe à chaleur de ventilation (10) démarre pour un fonctionnement normal une fois que la séquence de dégivrage est achevée par:
- l'ouverture du registre (S3) d'air extérieur vers l'évaporateur (KF2),
- le démarrage du compresseur (12),
- l'ouverture du registre (S1) d'air frais vers le condenseur (KF1),
- le réglage du registre (S2) d'air de retour vers l'évaporateur (KF2) pour conduire l'air de retour vers l'évaporateur (KF2),
- l'augmentation du niveau de puissance au ventilateur d'échappement (V2) jusqu'au point de consigne du volume d'air pendant le fonctionnement normal, et
- l'augmentation du niveau de puissance au ventilateur d'alimentation en air (V1) jusqu'au point de consigne du volume d'air en fonctionnement normal.

8. Procédé selon la revendication 1, dans lequel le transmetteur de pression (PV1) est installé sur le côté entrée et le côté sortie de l'évaporateur (KF2) pour mesurer la chute de pression à travers l'évaporateur (KF2).

9. Procédé selon la revendication 1, dans lequel, pour empêcher l'arrêt du flux d'air provenant de la pompe à chaleur de ventilation (10) pendant le dégivrage, la circulation d'air est réduite à 50 % en utilisant la commande du registre pour conduire de l'air dans la pompe à chaleur de ventilation, où de l'énergie dans 50 % du volume de l'air ambiant chauffé est utilisée par le ventilateur (V2) à une puissance de 50 % qui aspire l'air de la pièce chauffée pour dégivrer l'évaporateur (KF2).

10. Procédé selon la revendication 9, dans lequel le ventilateur d'alimentation en air (V1) tourne à une puissance de 50 % et aspire 50 % de l'air de retour pour le renvoyer vers la pièce à chauffer.

11. Procédé selon la revendication 1, dans lequel une batterie électrique (24) qui est commandée par la température de l'air d'alimentation dans l'automate après le condenseur (KF1) est utilisée pour maintenir la température de l'air d'alimentation pendant le dégivrage.

12. Procédé selon les revendications 10 et 11, dans lequel 50 % de l'air ambiant chauffé est renvoyé vers la pièce à titre d'air de recirculation à travers le condenseur (KF1), la batterie électrique (24) et le ventilateur d'alimentation d'air (V1).

13. Procédé selon la revendication 1, dans lequel un égouttage s'effectue par un ruissellement de l'humidité de l'air dans le condenseur (KF1) en mode de chauffage et de l'évaporateur (KF2) en mode de refroidissement, où l'égouttage provenant du condenseur (KF1) et de l'évaporateur (KF2) est couplé ensemble à un sas rempli d'eau commun et avec des sorties (20) vers le côté échappement / côté entrée d'air.
